# EUROPEAN PATENT APPLICATION

(11) **EP 2 056 534 A1**
(43) Date of publication of application: **06.05.2009**
(21) Application number: 07721521.8
(22) Date of filing: 21.06.2007
(51) Int. Cl.: H04L 12/46, H04M 11/00

(54) **A REMOTE LOCATION CONTROL METHOD AND SYSTEM, REMOTE CONTROL END AND CONTROLLED END**

(30) Priority: 05.07.2006 CN 200610036356
(71) Applicant: Gree Electric Appliances Inc. Of Zhuhai, Zhuhai City, Guangdong 519070 (CN)
(72) Inventor: DONG, Mingzhu, Zhuhai City, Guangdong 519070 (CN); MA, Yingjiang, Zhuhai City, Guangdong 519070 (CN); JIN, Gang, Zhuhai City, Guangdong 519070 (CN); ZENG, Liang, Zhuhai City, Guangdong 519070 (CN)
(74) Representative: Want, Clifford James
(86) International application number: PCT/CN2007/001948
(87) International publication number: WO 2008/006288

(57) **Abstract**

A method and a system for controlling remote location. The system includes a remote control end and a controlled end. The remote control end includes a location module for acquiring current geographical coordinate information, a man-machine interaction module, a send-receive module, and a control module for calculating the distance between the remote control end and the controlled end according to the geographical coordinate information, sending the control parameter to the controlled end by the send-receive module in the case of the distance meeting the preset distance. The controlled end includes a controlled device, a communication module, and a control module. The communication module receives control information, and the control module controls the controlled device. The controlled device may be an air condition, a TV, a refrigerator, a washer, or a micro-wave oven. This method and system of remote location control are convenient use and low cost.

## Description

### Field of the technology

The invention relates to the field of wireless communication, in particular to a method and a system for Remote location control by virtue of a wireless network and a remote control end and controlled end of the sytem.

### Description of the related art

As the quality of people's life gradually improves, more and more people expect to be able to enjoy the comfort brought by air conditioners when they come home in wet spring, hot summer and cold winder. At present, the known wireless remote control panel of air conditioners generally consists of a receiver and an emitter and only can be operated in a very short distance, if the distance is too far, generally related but cumbersome operations are needed. A survey shows many users hope that the air conditioner can automatically start up without any operation by the users themselves when they are going home or coming to companies and have a certain distance to the destination; however, the existing air conditioner basically fail to meet this requirement.

Nowadays, people gradually realize the value of target positioning which can accomplish the remote control by controlling the controllers of the air conditioner at a remote end via a wireless network. The Global Position System (GPS) is one of the remote control technologies and is gradually integrated into all application fields of the national economic construction, national defense construction, people's life and social development. In addition, the GPS technology has the characteristics of all-weather, high precision, high reliability and automatic measurement.

With the continuous improvement of communication technologies and continuous perfection of foundation communication network facility, the applications of acquiring the position information (longitude and latitude coordinates) of mobile end users by the network of telecom and mobile operators (such as GSM network, CDMA network, 3G network, GPRS network, etc.) are increasing day by day, and the consumption products positioned by mobile phones and communication networks gradually enter into people's life.

### Summary of the invention

The invention overcomes the disadvantages of the existing technologies and provides a method and a system controlled by a wireless network and a remote control end and controlled end thereof.

On the one hand, the invention provides a Remote location control method which comprises the steps as follows:
S1. The remote control end acquires self geographic coordinate information via a wireless communication network:
S2. The control module of the said remote control end compares the said geographic coordinate information and the preset parameters, if the geographic coordinate information does not comply with the preset parameter, back to the step S1; if the geographic coordinate information complies with the preset condition, the control information is transmitted to the controlled end;
S3. The said controlled end receives the said control information;
S4. The control module of the said controlled end controls the said controlled end according to the control information received.

According to the said method, the said step S4 further includes that the control module of the said controlled end starts the said controlled end and feeds back the running state data of the said controlled end to the said remote control end.

According to the said method, a step is included prior to the step S1 as follows: the said remote control end and the said controlled end are initialized, and the said preset parameters are input and set up;

According to the said method, the said controlled end refers to an air conditioner, a television set, a refrigerator, a washing machine or a microwave oven.

On the other hand, the invention provides a remote control end for Remote location control, comprising:
a location module which is used for acquiring the geographic coordinate information of the said remote control end;
a man-machine interactive module which is used for the system initialization and man-machine interaction;
a transceiver module which is connected with the said location module and the man-machine interactive module and communicates with the controlled end;

In the said remote control end, the said location module refers to a GPS module.

In the said remote control end, the said location module refers to a wireless communication location module.

In the said remote control end, the said location module refers to a mobile phone.

In the said remote control end, the said remote control end further includes a control module which is connected with the said location module, the man-machine interactive module and the transceiver module and is used for calculating the distance between the said remote control end and the said controlled end according to the said geographic coordinate information, and transmits the control information to the said controlled end via the said transceiver module when the said distance is shorter than the preset distance.

On the other hand, the invention further provides a controlled end for the Remote location control, which comprises controlled equipment, and further comprises:
a communication module which receives the geographic coordinate information and/or the control parameters of the remote control end and feeds back the running state of the controlled equipment to the remote control end;
a control module which controls the said controlled equipment according to the said control parameter and feeds back the running state of the said controlled equipment to the said communication module.

In the said controlled end, controll equiment of the said controlled end calculates the distance between the said remote control end and the said controlled equiment according to the said geographic coordinate information, and controls the said controlled end according to the said control information when the said distance is shorter than the preset distance;

In the said controlled end, the said controlled equipment refers to an air conditioner, a television set, a refrigerator, a washing machine or a microwave oven.

The invention further provides a system for Remote location control which comprises a remote control end and a controlled end and is characterized in that:
The said remote control end comprises:
a location module which is used for acquiring the geographic coordinate information of the said remote control end;
a man-machine interactive module for the system initialization and man-machine interaction;
a transceiver module which is connected with the said location module and the man-machine interactive module and communicates with the controlled end;

The said controlled end comprises controlled equipment, and further comprises:
a communication module which receives the control parameter of the remote control end and feeds back the running state of the said controlled equipment to the remote control end;
a control module which controls the said controlled equipment according to the said control parameter and feeds back the running state of the said controlled equipment to the said communication module.

In the said system, the said location module refers to a GPS module or a mobile phone.

In the said system, the said remote control end further includes a control module which is connected with the said location module, the man-machine interactive module and the transceiver module, calculates the distance between the said remote control end and the said controlled end according to the said geographic coordinate information, and transmits the control information to the said controlled end via the said transceiver module when the said distance is shorter than the preset distance.

In the said system, the said controlled equipment refers to an air conditioner, a television set, a refrigerator, a washing machine or a microwave oven.

Compared with the existing technologies, the invention essentially provides a method and a system for controlling controlled equipment (for example, an air conditioner) by a wireless network. The system can preset the automatic running distance of a controlled equipment (for example, an air conditioner), and when the system detects that the geographic location information of a person reaches the preset distance, the system transmits the geographic location information to the control module of the controlled equipment (for example, an air conditioner) to control the automatic running of the controlled equipment(for example, an air conditioner), and a manual equipment (for example, an air conditioner) feeds back the running information at the same time. The system can improve the accuracy of the intelligent startup of controlled equipment (for example, an air conditioner) and reduce the energy waste. Meanwhile, a user can start up a controlled equipment (for example, an air conditioner) at a remote end in an intelligent manner, no manual operation is required, thus the controlled equipment (for example, an air conditioner) will be automatically started under the conditions set by the user, which is more convenient and quick in use.

### Brief description of the attached drawings

Fig. 1 is the schematic drawing of the air conditioning system of the first preferred embodiment;
Fig. 2 is the flow diagram of the control method of the first preferred embodiment;
Fig. 3 is the schematic drawing of the air conditioning system of the second preferred embodiment;
Fig. 4 is the communication schematic diagram of the mobile phone positioning air conditioning system of the second preferred embodiment;
Fig. 5 is the flow diagram of the control method of the second preferred embodiment.

### Detail description of the preferred embodiments

The invention is described in detail as follows according to the attached drawings and the embodiments.

The first preferred embodiment:
The air conditioning system with Remote location function in the embodiment is an air conditioning system with GPS technology which is called global positioning air conditioning system.

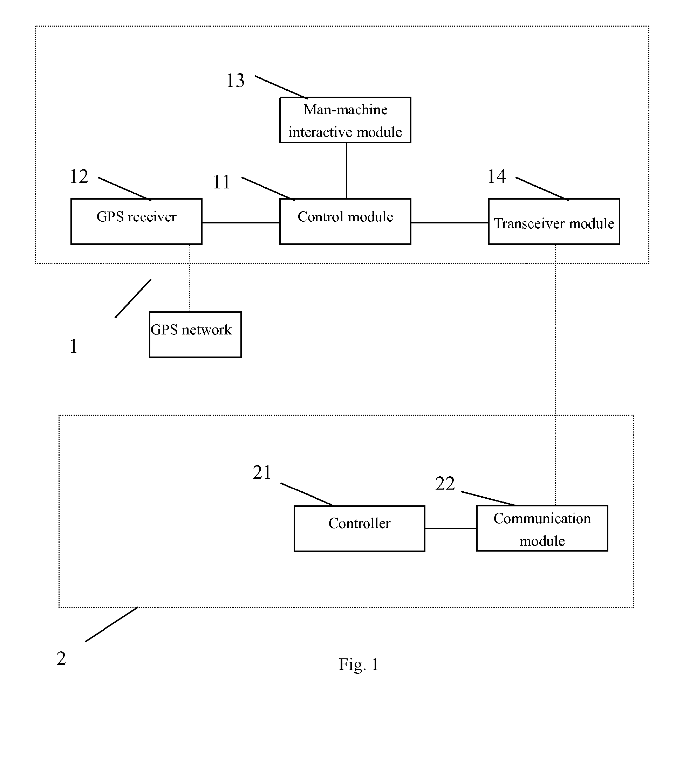

Please refer to Fig. 1. The global positioning air conditioning system shown in Fig. 1 comprises a GPS control device 1 at a remote end and an air conditioner 2. The air conditioner 2 is provided with a controller 21 and a communication module 22; the GPS control device 1 comprises a control module 11, a GPS receiver 12, a man-machine interactive module 13 and a transceiver module 14, wherein the GPS receiver 12, the man-machine interactive module 13 and the transceiver module 14 are connected with the control module 11 respectively.

As to the air conditioner 2: the controller 21 assists in the control module 11 in controlling the state of the air conditioner 2, for example, the controller 21 assists the control module 11 in starting or turning off the air conditioner or regulating the temperature of the air conditioner. The communication module 22 receives the control information transmitted from the remote end, and transmits the state information of the air conditioner 2 to the transceiver module 14 of the GPS control device 1 via wireless communication, and then transmits the state information to the control module 11.

As to the GPS control device 1: the GPS receiver 12 acquires the current coordinate information of the GPS control device 1 via the GPS network. The control module 11 acquires the above-mentioned information from the GPS receiver 12 and calculates the distance between the control module 11 and the air conditioner according to the information received, and when the distance conforms to the automatic starting distance of the air conditioner, the control module 11 transmits the control information of the air conditioner 2 to the communication module 22, and then to the controller 21 which controls the state of the air conditioner.

A user can control the GPS and the control module 11 of the control device 1 via the man-machine interactive module 13, thus controlling the state of the air conditioner. Meanwhile the user can realize the initial setting of the system through the man-machine interactive model including setting of the destination coordinate, setting of the distance parameter and the switching setting of the air conditioning system enable. The controller 21 controls the state of the air conditioner and transmits the state information of the air conditioner to the control module 11 via the transceiver module 14, and finally the user can obtain the state information of the air conditioner 2 via the man-machine interactive module 13.

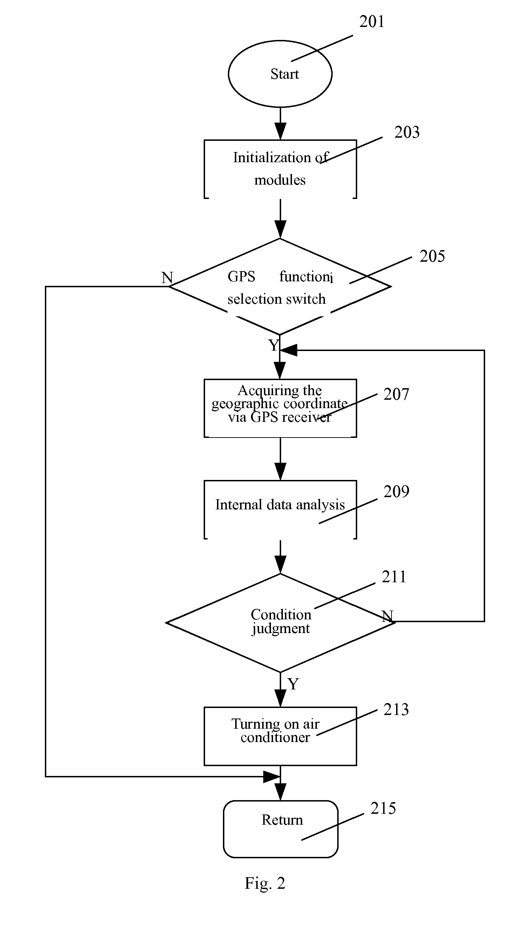

Fig. 2 shows the flow diagram of the implementation mode of the embodiment. After the beginning of the step 201, during the step 203, the user implement the initialization setting of the information of the modules such as the position and automatic startup distance of the air conditioner via the man-machine interactive module 13 of the GPS control device 1.

The user can hold the GPS control device 1 at the remote end of the air conditioner. The control method comprises the following steps:
In the step 205, the user judges whether the GPS functional switch is turned on, and if yes, the step 207 is entered, if not, the end step 215 is entered;
In the step 207, the GPS receiver 12 acquires the geographic coordinate information in a real-timer manner via the GPS network and transmits the above-mentioned information to the control module 11;
In the step 209, the control module 11 calculates the distance between it and the air conditioner according to the acquired information;
In the step 211, when the distance conforms to the automatic startup distance of the air conditioner, the control information on the air conditioner 2 is transmitted to the communication module 22 of the air conditioner 2 via the transceiver module 14 and then to the controller 21;
In the step 213, the controller 21 of the air conditioner 2 controls the state of the air conditioner 2 and transmits the state information of the air conditioner to the transceiver module 14 and the control module 11 of the GPS control module 1 via a wireless communication network, and the user can obtain the state information of the air conditioner 2 via the man-machine interactive module 13. When the above can be completed automatically by the system without any operation of the user in the control process, the user is only required to initialize the settings before use.

The user can control the turn-on or turn-off of the remote control function by setting the function pushbutton of the GPS control device 1 or the air conditioner 2.

A GPS can cover the whole world and has the advantages of higher coverage and precision compared with the common wireless signal. The controllable distance of the air conditioning system with the GPS also expands.

The second preferred embodiment:
The Remote location air conditioning system in the embodiment is an air conditioning system with a mobile network technology which is called mobile phone positioning air conditioning system.

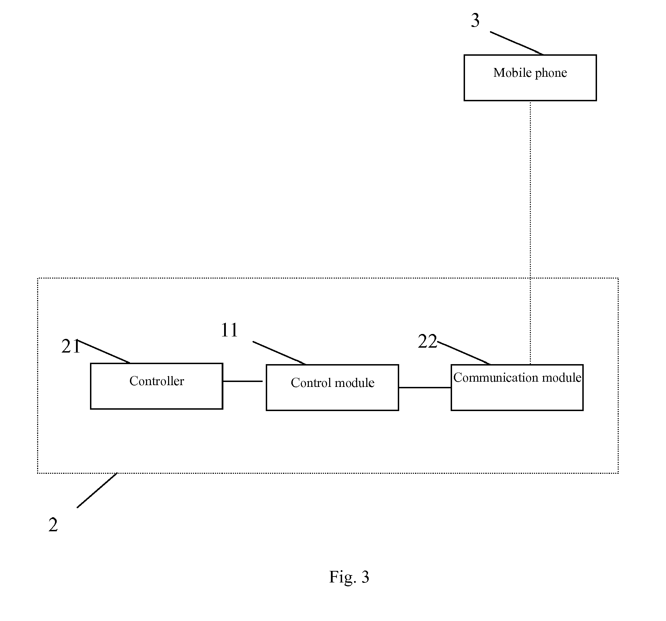

Please refer to Fig. 3. The mobile phone positioning air conditioning system shown in Fig. 3 comprises a mobile phone 3 at a remote end and an air conditioner 2. Compared with the conditioner 2 in the first preferred embodiment, the air conditioner 2 in the embodiment has an additional control module 11 in terms of the structure; that is, in the embodiment, the control module 11 is provided nearby the air conditioner.

The mobile phone 3 acquires the current coordinates of the mobile phone 3 via a mobile communication network (for example, GSM network, CDMA network, 3G network, GPRS network, etc.), and transmits the above-mentioned geographic coordinate information to the control module 11 of the air conditioner via a communication module 22 by virtue of a wireless network, the control module 11 calculates the distance between the it and the air conditioner 2 and judges whether the distance conforms to the automatic startup distance of the air conditioner 2. When the distance conforms to the running condition, the control module 11 controls the state of the air conditioner via the controller 21 according to the preset data.

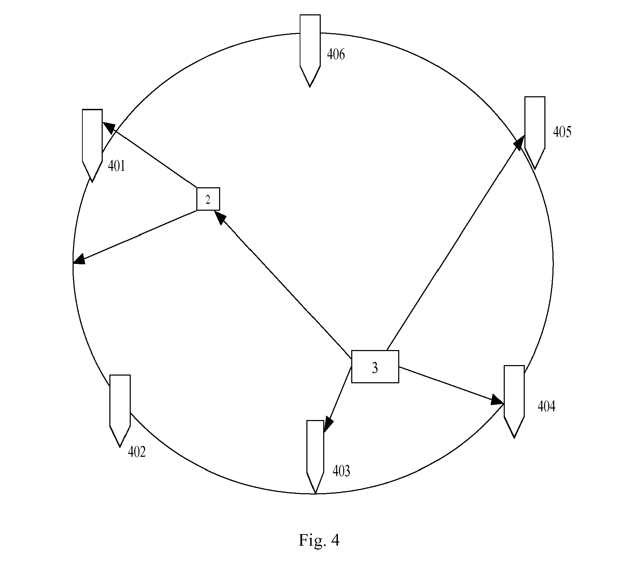

Fig. 4 is a schematic diagram of the communication network for the system shown in Fig. 3. The mobile phone 3 realizes the Remote location control over the air conditioner 2 via one or a plurality of the base stations 401 to 406.

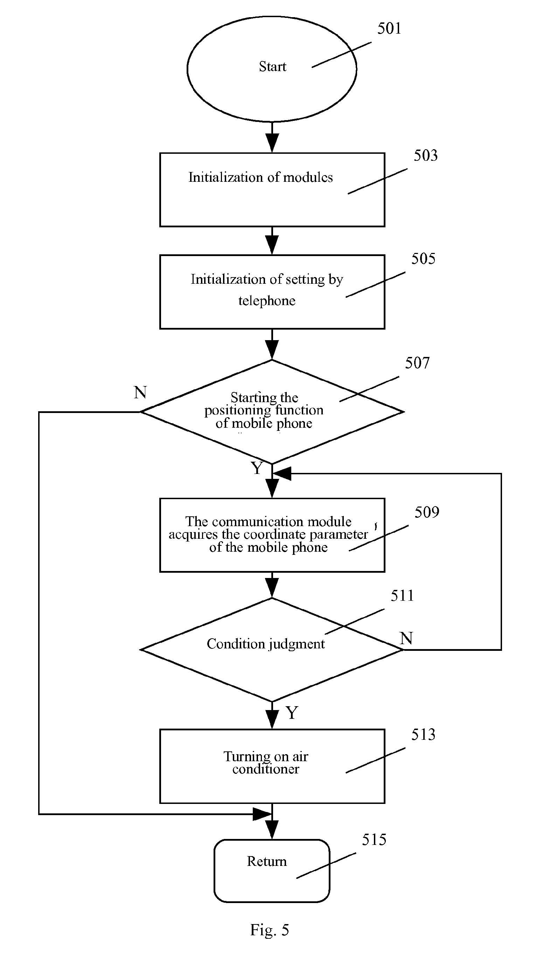

Fig. 5 shows the flow diagram of the implementation mode of the embodiment. After the beginning of the step 501, during the step 503 and the step 505, the user initializes the setting of information of the modules such as the position and automatic startup distance of the air conditioner via the mobile phone 3 he carries.

In use, the control method is as follows:
In the step 507, the user judges whether the positioning function switch of the mobile phone is turned on or not, if yes, the step 509 is entered, if not, the end step 515 is entered;
In the step 509, the mobile phone 3 acquires the current geographic coordinates in a real-time manner via the mobile communication network and transmits the above-said geographic coordinate information to the control module 11 of the air conditioner via the communication module 22 by virtue of a wireless network;
In the step 511, the control module 11 calculates the distance between it and the air conditioner 2 and judges whether the distance conforms to the automatic startup distance of the air conditioner 2.

When the distance conforms to the running condition, the control module 11 controls the motion of the air conditioner via the controller 21 according to the preset data and transmits the state information to the mobile phone 3 via the wireless communication network, as shown in the step 513. At the moment, the user can obtain the state information of the air conditioner 2 in a real-time manner via the mobile phone 3. When the above can be completed automatically by the system without any operation of the user, the user is only required to initialize the settings before use.

The user can control the turning-on or turning-off of the remote control function by setting the function pushbutton of the mobile phone 3 or the air conditioner 2.

The third preferred embodiment:

The difference between the third embodiment and the first or the second embodiment is that the controlled device in the embodiment is another electrical apparatus other than an air conditioner, such as a television set, a refrigerator, a washing machine or a microwave oven.

The above-said embodiments only describe rather than limit the technical scheme of the invention. For example, a plurality of remotely controlled air conditioners can be controlled by the same remote control device, or the same air conditioner can be controlled by a plurality of remote control devices. Another example is that the controller and the communication module of the air conditioning system can be integrated in design; in addition, the wireless network is not limited to the GPS and the mobile communication network in the above-said embodiments. Therefore, any modification or partial substitution which is not departing from the spirit and scope of the present invention should be included in the scope of the claims of present invention..

## Claims

1. A method for Remote location control **characterized by** comprising the following steps:
S1. A remote control end acquires self geographic coordinate information via a wireless communication network;
S2. The control module of the said remote control end compares the said geographic coordinate information and the preset parameters, if the geographic coordinate information does not comply with the preset parameter, back to the step S1; if the geographic coordinate information complies with the preset condition, the control information is transmitted to the controlled end;
S3. The said controlled end receives the said control information;
S4. The control module of the said controlled end controls the controlled end according to the received control information.

2. The method according to Claim 1, **characterized in that** the said step S4 further comprises the steps as follows:
The control module of the said controlled end starts up the said controlled end, and feeds back the running state data of the said controlled end to the said remote control end via the wireless communication network.

3. The method according to Claim 1, **characterized in that** the step S1 follows:
Initializing the said remote control end and the said controlled end, and inputting or setting the preset parameters.

4. The method according to any one of Claim 1 to 3, **characterized in that** the said controlled end is an air conditioner, a television set, a refrigerator, a washing machine or a microwave oven.

5. A remote control end for Remote location control **characterized by** comprising:
a location module which is used for acquiring the geographic coordinate information of the said remote control end;
a man-machine interactive module which is used for the system initialization and man-machine interaction;
a transceiver module which is connected with the said location module and the man-machine interactive module, and communicates with the controlled end;

6. The said remote control end according to Claim 5, **characterized in that** the said location module is a GPS module.

7. The said remote control end according to Claim 5, **characterized in that** the said location module is a wireless communication location module.

8. The said remote control end according to Claim 7, **characterized in that** the said location module is a mobile phone.

9. The said remote control end according to any one of Claim 5 to 8, **characterized in that** the said remote control end further includes a control module which is connected with the said location module, the man-machine interactive module and the transceiver module and is used for calculating the distance between the said remote control end and the said controlled end according to the said geographic coordinate information, and transmits the control information to the said controlled end via the said transceiver module when the said distance is shorter than the preset distance.

10. A controlled end for Remote location control which comprises controlled equipment and is **characterized by** further comprising:
a communication module which receives the geographic coordinate information and/or control information of remote control end, and feeds back the running state of the said controlled equipment to the remote control end;
a control module which controls the said controlled equipment according to the said control parameter and feeds back the running state of the said controlled equipment to the said communication module.

11. The said controlled end according to Claim 10, **characterized in that** controll equiment of the said controlled end calculates the distance between the said remote control end and the said controlled equiment according to the said geographic coordinate information, and controls the said controlled end according to the said control information when the said distance is shorter than the preset distance;

12. The said controlled end according to Claim 10or 11, **characterized in that** the said controlled equipment is an air conditioner, a television set, a refrigerator, a washing machine or a microwave oven.

13. A system for Remote location control which comprises a remote control end and a controlled end and is **characterized in that**:
the said remote control end comprises:
a location module which is used for acquiring the geographic coordinate information of the said remote control end;
a man-machine interactive module for the system initialization and man-machine interaction;
a transceiver module which is connected with the said location module and the man-machine interactive module, and communicates with the controlled end;
The said controlled end comprises controlled equipment, and further comprises:
a communication module which receives the control parameter from the remote control end, and feeds back the running state of the said controlled equipment to the remote control end;
a control module which controls the said controlled equipment according to the said control parameter, and feeds back the running state information of the said controlled equipment to the said communication module.

14. The said system according to Claim 13, **characterized in that** the said location module is a GPS module or a mobile phone.

15. The said system according to Claim 14, **characterized in that** the said remote control end further includes a control module which is connected with the said location module, the man-machine interactive module and the transceiver module and is used for calculating the distance between the said remote control end and the said controlled end according to the said geographic coordinate information, and transmits the control information to the said controlled end via the said transceiver module when the said distance is shorter than the preset distance.

16. The said system according to any one of Claim 13 to 15, **characterized in that** the said controlled equipment is an air conditioner, a television set, a refrigerator, a washing machine or a microwave oven.
